# EUROPEAN PATENT APPLICATION

(11) **EP 4 700 692 A1**
(43) Date of publication of application: **25.02.2026**
(21) Application number: 24807583.0
(22) Date of filing: 16.05.2024
(51) Int. Cl.: G06Q 50/10, G06Q 50/50, G06K 19/06, H04W 4/06, H04W 4/21, H04W 4/80, H04L 51/18, H04L 51/52, H04L 51/07

(54) **ELECTRONIC DEVICE FOR SHARING CONTENT BY USING QR CODE AND OPERATION METHOD THEREOF**

(30) Priority: 18.05.2023 KR 20230064158; 16.06.2023 KR 20230077444
(71) Applicant: Samsung Electronics Co., Ltd., Suwon-si, Gyeonggi-do 16677 (KR)
(72) Inventor: CHOI, Eunha, Suwon-si Gyeonggi-do 16677 (KR); KIM, Myungho, Suwon-si Gyeonggi-do 16677 (KR); KIM, Jeonghoon, Suwon-si Gyeonggi-do 16677 (KR); AN, Junhwan, Suwon-si Gyeonggi-do 16677 (KR); JANG, Seungmin, Suwon-si Gyeonggi-do 16677 (KR); HAN, Yonggil, Suwon-si Gyeonggi-do 16677 (KR)
(74) Representative: Gulde & Partner
(86) International application number: PCT/KR2024/006679
(87) International publication number: WO 2024/237712

(57) **Abstract**

This electronic device includes: a first communication module; a second communication module; a display; at least one processor; and a memory that stores instructions. According to one embodiment, the instructions may be configured to, when executed by the at least one processor, instruct the electronic device to: identify a command for sharing content with at least one external electronic device by using a QR code; acquire, on the basis of the command, a first link address for sharing, via a server, the content including a link identifier received from the server through the first communication module, on the basis of the command; and convert the link address into a first link address including an indicator for connecting to a first external electronic device among the at least one external electronic device through the second communication module. The electronic device may be configured to display, on the display, a first QR code generated on the basis of the first link address, and when the first external electronic device and the electronic device are connected through the second communication module on the basis of the display of the first QR code, the electronic device may be configured to transmit the content to the first external electronic device through the second communication module.

## Description

### [Technical Field]

Various embodiments of the disclosure relate to an electronic device sharing content using a QR code and a method of operating the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

An electronic device may provide various functions for sharing content with another electronic device. For example, an electronic device may share content with another electronic device through a device to device (D2D) method. Further, an electronic device may share content with another electronic device by uploading content to a server through a device to server (D2S) method.

### [Detailed Description of the Invention]

### [Technical Solution]

According to an embodiment, an electronic device may include a first communication module, a second communication module, a display, at least one processor, and a memory storing instructions. According to an embodiment, the instructions may, when executed by the at least one processor, cause the electronic device to identify a command to share content to at least one external electronic device using a QR code. According to an embodiment, the instructions may, when executed by the at least one processor, cause the electronic device to obtain a first link address for sharing the content through the server based on the command, the first link address including a link identifier received from a server through the first communication module. According to an embodiment, the instructions may, when executed by the at least one processor, cause the electronic device to convert the link address into a first link address including an indicator for connecting with a first external electronic device among the at least one external electronic device through the second communication module. According to an embodiment, the instructions may, when executed by the at least one processor, cause the electronic device to display a first QR code generated based on the first link address on the display. According to an embodiment, the instructions may, when executed by the at least one processor, cause the electronic device to upload the content to the server through the first communication module based on the link address. According to an embodiment, the instructions may, when executed by the at least one processor, cause the electronic device to transmit the content to the first external electronic device through the second communication module when the first external electronic device and the electronic device are connected through the second communication module based on display of the first QR code.

According to an embodiment, a method of operating an electronic device may include identifying a command to share content to at least one external electronic device using a QR code. According to an embodiment, the method may include obtaining a link address for sharing the content through the server based on the command, the link address including a link identifier received from a server through a first communication module included in the electronic device. According to an embodiment, the method of operating the electronic device may include converting the link address into a first link address including an indicator for connecting with a first external electronic device among the at least one external electronic device through a second communication module 255 included in the electronic device. According to an embodiment, the method of operating the electronic device may include displaying a first QR code generated based on the first link address on a display included in the electronic device. According to an embodiment, the method of operating the electronic device may include uploading the content to the server through the first communication module using the link address. According to an embodiment, the method of operating the electronic device may include transmitting the content to the first external electronic device through the second communication module when the first external electronic device and the electronic device are connected through the second communication module based on display of the first QR code.

According to an embodiment, a non-transitory recording medium may store instructions for performing operations including identifying a command for an electronic device to share content to at least one external electronic device using a QR code, obtaining a first link address for sharing the content through the server based on the command, the first link address including a link identifier received from a server through a first communication module included in the electronic device, converting the link address into a first link address including an indicator for connecting with a first external electronic device among the at least one external electronic device through a second communication module 255 included in the electronic device, displaying a first QR code generated based on the first link address on a display included in the electronic device, uploading the content to the server through the first communication module based on the link address, and transmitting the content to the first external electronic device through the second communication module when the first external electronic device and the electronic device are connected through the second communication module based on display of the first QR code.

### [Brief Description of Drawings]

FIG. 1 is a view illustrating an electronic device in a network environment according to an embodiment.
FIG. 2A is a view illustrating an electronic device and an external electronic device sharing content using a QR code, according to an embodiment.
FIG. 2B is a block diagram illustrating an electronic system for sharing content using a QR code, according to an embodiment.
FIG. 3 is a flowchart illustrating a method of operating an electronic device for sharing content using a QR code, according to an embodiment.
FIG. 4 is a flowchart illustrating a method of operating an external electronic device for downloading content by scanning a QR code, according to an embodiment.
FIG. 5 is a flowchart illustrating a method of operating an electronic device for transmitting content by attempting a 1:1 connection to an external electronic device, according to an embodiment.
FIG. 6 is a flowchart illustrating a method of operating an electronic device for sharing content with an external electronic device through a server, according to an embodiment.
FIG. 7 is a flowchart illustrating a method of operating an electronic device for sharing content with an external electronic device through a server, according to an embodiment.
FIG. 8 is a view illustrating a QR code, a first link, and a second link, according to an embodiment.
FIG. 9 is a view illustrating screens for an electronic device to share content using a QR code, according to an embodiment.
FIG. 10 is a view illustrating screens for an external electronic device to receive content from an electronic device by scanning a QR code, according to an embodiment.
FIG. 11 is a view illustrating screens for an external electronic device to download content, according to an embodiment.
FIG. 12 is a view illustrating screens for an electronic device to upload content to a server to share content using a QR code, according to an embodiment.
FIGS. 13A and 13B are views illustrating screens for an external electronic device to download content from a server by scanning a QR code, according to an embodiment.

### [Mode for Carrying out the Invention]

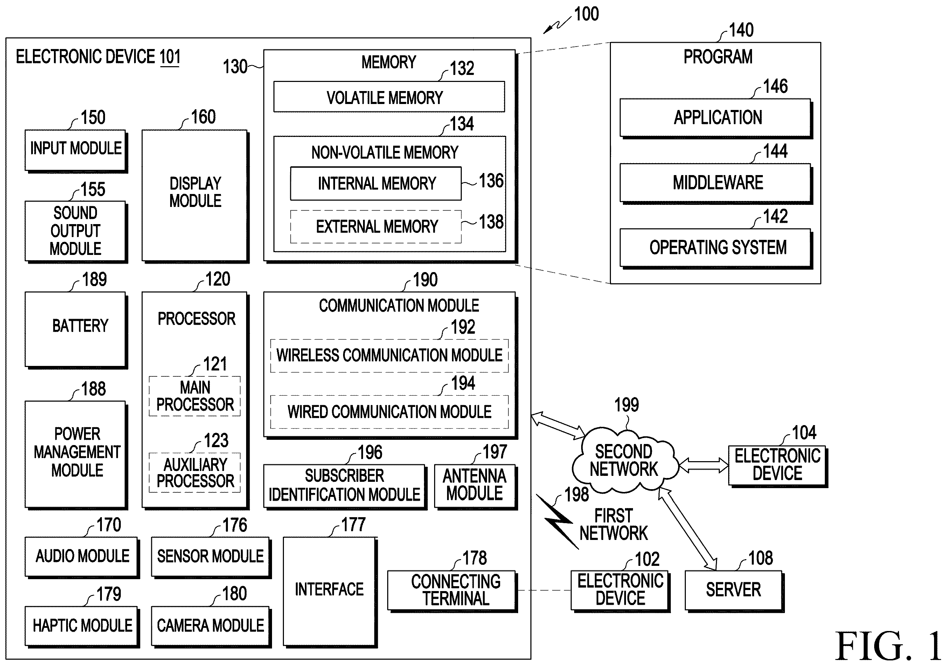

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

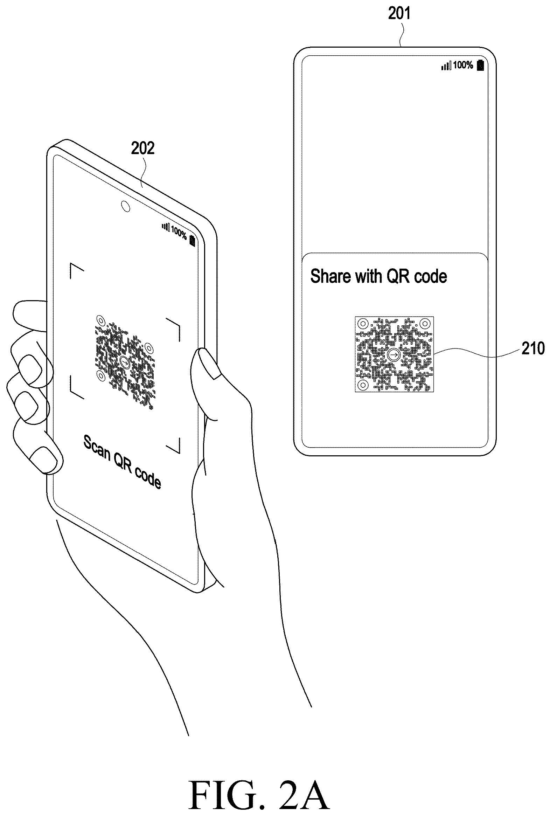

FIG. 2A is a view illustrating an electronic device and an external electronic device sharing content using a QR code, according to an embodiment.

Referring to FIG. 2A, according to an embodiment, an electronic device 201 (e.g., the electronic device 101 of FIG. 1) may share data with an external electronic device 202 (e.g., the electronic device 102 of FIG. 1). For example, data may refer to data stored in the electronic device 201 and may include various types of information (e.g., content). For example, content may include an image, a photo, a video, contact information, and text, and the form or type thereof may not be limited.

According to an embodiment, the external electronic device 202 may be positioned around the electronic device 201. For example, the external electronic device 202 may be positioned at a short distance from the electronic device 201.

According to an embodiment, the electronic device 201 may transmit content to the external electronic device 202 through a 1:1 connection to the external electronic device 202. For example, a method of sharing content through a 1:1 connection may use a device to device (D2D) method. For example, the 1:1 connection may be formed using Wi-Fi direct and/or BLE communication technology. Alternatively, the electronic device 201 may upload the content to a server so that the external electronic device 202 downloads the content through the server. For example, a method of sharing content through a server may use a device to server (D2S) method.

In an existing D2D method, the electronic device 201 had to directly search for and select a peripheral device to share content with. In this case, the electronic device 201 could not share content using a quick response (QR) code in the D2D method. Further, the existing D2D method could limit the electronic device 201 from sharing content according to the model or platform of the external electronic device 202. Further, when the external electronic device 202 is set not to respond to a peripheral device search of the electronic device 201, the electronic device 201 could be limited from sharing content through the D2D method.

In an existing D2S method, the electronic device 201 had to share a link address for downloading content or a QR code representing the link address. An external electronic device that received the link address or QR code could download content from a server through the link address. In other words, a method of sharing content using a QR code could only be applied to the D2S method. Accordingly, an existing electronic device could not use the D2D method when sharing content with an external electronic device using a QR code, which could cause inconvenience to a user.

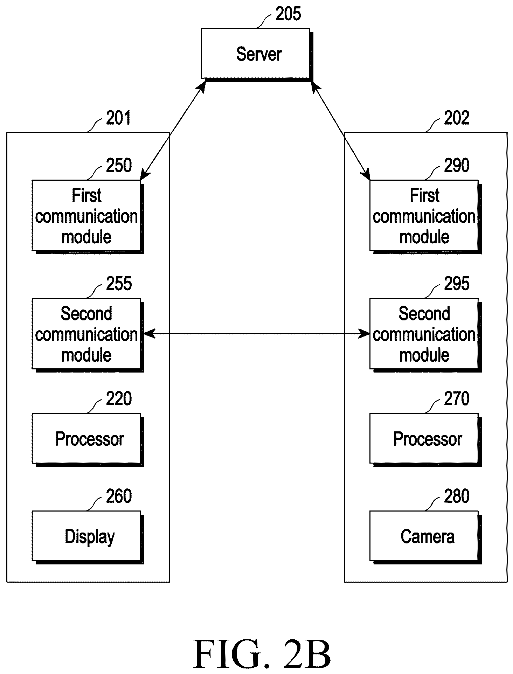

According to an embodiment, the electronic device 201 may share content with the external electronic device 202 using a QR code 210 in both D2D and D2S methods. The electronic device 201 may display the QR code 210 on a display (e.g., the display 260 of FIG. 2B) to share content in either the D2D method or the D2S method. The external electronic device 202 may scan the QR code 210 displayed on the electronic device 201 to obtain or download content in either the D2D method or the D2S method.

According to an embodiment, the electronic device 201 may provide content to the external electronic device 202 using the QR code 210 regardless of the model or platform of the external electronic device 202.

Accordingly, the electronic device 201 may share content using a QR code in both D2D and D2S methods, providing convenience to a user.

FIG. 2B is a block diagram illustrating an electronic system for sharing content using a QR code, according to an embodiment.

Referring to FIG. 2B, according to an embodiment, an electronic system may include an electronic device 201, an external electronic device 202, and a server 205.

According to an embodiment, the electronic device 201 may include a processor 220, a first communication module 250, a second communication module 255, and a display 260.

According to an embodiment, the processor 220 may control the overall operation of the electronic device 201. For example, the processor 220 may be implemented to be the same as or similar to the processor 120 of FIG. 1.

According to an embodiment, the processor 220 may perform an operation of searching for at least one external electronic device to share content with the at least one external electronic device through the second communication module 255. For example, the processor 220 may perform a discovery operation through the second communication module 255. For example, the second communication module 255 may be a communication module for performing short-range communication. For example, the second communication module 255 may support Wi-Fi, Bluetooth, and BLE communication.

According to an embodiment, the processor 220 may identify or determine to share content to at least one external electronic device using a QR code. For example, the processor 220 may identify or determine to share content using a QR code based on a user input selecting a sharing method using a QR code among various sharing methods.

According to an embodiment, the processor 220 may request a link (or link address) from the server 205 through the first communication module 250 in response to identifying to share content using a QR code. For example, the first communication module 250 may support communication technology (e.g., Wi-Fi, cellular wireless communication technology) capable of wirelessly transmitting/receiving data with the server 205. The processor 220 may receive link information (e.g., a link identifier) from the server 205 through the first communication module 250. Alternatively, the processor 220 may receive a link address for sharing content through the server 205 including link information from the server 205. For example, the link information may include a link identifier. For example, the link identifier may refer to a key value (e.g., link ID) for downloading content from the server 205. For example, the link identifier may be implemented as a 12-character uppercase and lowercase alphanumeric string.

According to an embodiment, the processor 220 may obtain a link address based on link information received from the server 205. For example, the link address may refer to a URL address that may upload content to the server 205 through the first communication module 250 and share the content uploaded to the server 205 with an external electronic device. For example, the link address may include a URL address including a link identifier.

According to an embodiment, the processor 220 may convert the link address into a first link address. For example, the first link address may include an indicator for direct connection or 1:1 connection with an external electronic device to share content through the second communication module 255. For example, the first link address may include a URL address including an indicator (e.g., a designated string) that may be processed by a designated application. For example, the designated application may be an application for sharing content. The processor 220 may generate a first QR code based on the first link address. For example, the first QR code may represent a link address included in the first link address. The processor 220 may display the first QR code (e.g., the QR code 210 of FIG. 2A) on the display 260.

According to an embodiment, the processor 220 may upload content to be shared to the server 205 based on the first link address. For example, the processor 220 may upload content to be shared to the server 205 through the first communication module 250 based on displaying the first QR code on the display 260. Alternatively, the processor 220 may upload content to be shared to the server 205 through the first communication module 250 based on the external electronic device 202 requesting download of content through the server 205.

According to an embodiment, when it is identified that a 1:1 connection (or direct connection) between the electronic device 201 and the external electronic device 202 is possible based on the external electronic device 202 scanning the first QR code displayed on the display 260, the processor 220 may attempt a 1:1 connection to the external electronic device 202 through the second communication module 255. For example, the 1:1 connection may be formed using Wi-Fi direct or BLE communication through the second communication module 255. When the 1:1 connection is formed, the processor 220 may transmit content to the external electronic device 202 in the D2D method.

According to an embodiment, when it is identified that a 1:1 connection between the electronic device 201 and the external electronic device 202 is not possible based on the external electronic device 202 scanning the first QR code displayed on the display 260, the processor 220 may provide content to the external electronic device 202 using the content uploaded to the server 205. In this case, the processor 220 may share content with the external electronic device 202 in the D2S method.

According to an embodiment, the external electronic device 202 may include a processor 270, a camera 280, a first communication module 290, and a second communication module 295.

According to an embodiment, the external electronic device 202 may be an external electronic device to receive shared content among at least one external electronic device around the electronic device 201.

According to an embodiment, the processor 270 may control the overall operation of the external electronic device 202. For example, the processor 270 may be implemented to be the same as or similar to the processor 120 of FIG. 1.

According to an embodiment, the processor 270 may scan the first QR code displayed on the display 260 of the electronic device 201 using the camera 280.

According to an embodiment, the processor 270 may identify whether a 1:1 connection (or direct connection) with the electronic device 201 is possible based on scanning the first QR code. For example, the processor 270 may identify a link address (e.g., a first link address) represented by the first QR code. The processor 270 may identify a designated application that may execute or process the link address (or an indicator included in the link address) among a plurality of applications stored in the external electronic device 202. For example, the processor 270 may identify the designated application using an APP link handler provided by Android.

According to an embodiment, if the designated application is not stored in the external electronic device 202, the processor 270 may determine that a 1:1 connection (or direct connection) is not possible. Alternatively, if the designated application is stored in the external electronic device 202, the processor 270 may determine that a 1:1 connection is possible. In this case, the processor 270 may execute the designated application to perform an operation for receiving content in the D2D method.

According to an embodiment, when determining that a 1:1 connection is not possible, the processor 270 may access the server 205 based on a link address represented by the first QR code through the first communication module 290. For example, the first communication module 290 may support communication technology (e.g., Wi-Fi, cellular communication technology) capable of transmitting/receiving data with the server 205. For example, the processor 270 may open a link address represented by the first QR code using a browser application. When the electronic device 201 has uploaded content to the server 205, the processor 270 may download the content from the server 205 through the first communication module 290.

According to an embodiment, when determining that a 1:1 connection is possible, the processor 270 may attempt a 1:1 connection to the electronic device 201 through the second communication module 295. For example, the second communication module 295 may support short-range communication technology (e.g., Wi-Fi, Bluetooth, BLE communication technology). For example, the processor 270 may obtain hash information using a link identifier (e.g., linkID) of the first link address represented by the first QR code. For example, the processor 270 may transmit a response signal to the electronic device 201 through the second communication module 295. For example, the response signal may be a signal responding to a discovery operation of the electronic device 201. For example, the response signal may include hash information.

According to an embodiment, when hash information included in the response signal matches a hash value of the first link address, the processor 270 may receive content to be shared from the electronic device 201 through the second communication module 295.

According to an embodiment, the server 205 may perform a relay operation for content sharing between the electronic device 201 and the external electronic device 202. For example, the server 205 may be implemented as a server for supporting the electronic device 201 or a designated application. Alternatively, the server 205 may be implemented as a third-party server unrelated to the electronic device 201.

According to an embodiment, the server 205 may store content so that the electronic device 201 and the external electronic device 202 share content. Further, the server 205 may transmit link information (e.g., a link identifier) to the electronic device 201 according to a request from the electronic device 201. Alternatively, the server 205 may transmit a link address (e.g., a URL address) including link information (e.g., a link identifier) to the electronic device 201 according to a request from the electronic device 201. Further, the server 205 may transmit a notification signal to the electronic device 201 informing that the external electronic device 202 accesses the server 205 to look up content or request download. For example, the notification signal may further include information about a link identifier of the first link address.

At least some of the operations of the electronic device described below may be performed by the processor 220. Further, at least some of the operations of the external electronic device may be performed by the processor 270. However, for convenience of explanation, the subject of operations is described as an electronic device or an external electronic device.

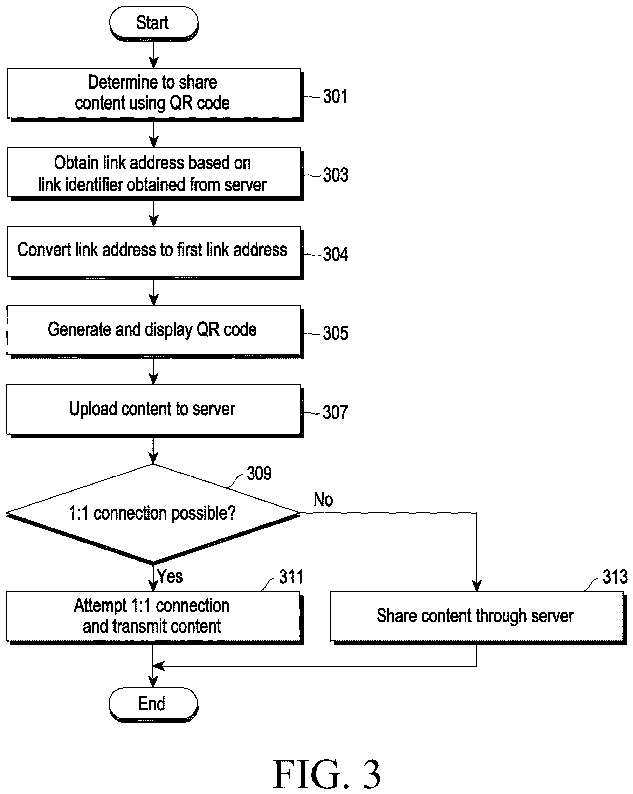

FIG. 3 is a flowchart illustrating a method of operating an electronic device for sharing content using a QR code, according to an embodiment.

Referring to FIG. 3, according to an embodiment, in operation 301, an electronic device (e.g., the electronic device 201 of FIG. 2A) may determine to share content to at least one external electronic device using a QR code. For example, the electronic device 201 may identify a command to share content to at least one external electronic device using a QR code 210 based on a user input determining a content sharing method. When the command is identified, the electronic device 201 may start an operation of sharing content using the QR code 210.

According to an embodiment, in operation 303, the electronic device 201 may obtain a first link address based on a command to share content to at least one external electronic device using the QR code 210. For example, the electronic device 201 may obtain a link address based on link information (e.g., a link identifier) obtained from a server (e.g., the server 205 of FIG. 2B) through the first communication module (e.g., the first communication module 250 of FIG. 2B). Alternatively, the electronic device 201 may obtain a link address including link information from the server 205. For example, the link address may include URL information for sharing content stored in the electronic device 201 with an external electronic device through the server 202. The URL information included in the link address may include a link identifier of the link address.

According to an embodiment, in operation 304, the electronic device 201 may convert the link address into a first link address. For example, the first link address may include URL information including an indicator for connecting (e.g., 1:1 connection) with an external electronic device (e.g., the external electronic device 202 of FIG. 2B) through the second communication module (e.g., the second communication module 255 of FIG. 2B). For example, the indicator may include a designated identifier (e.g., text or string) that may be processed through a designated application. For example, the first link address may include a URL address in which a characteristic string in the URL address of the link address is converted to an indicator.

According to an embodiment, in operation 305, the electronic device 201 may generate a QR code based on the first link address and display the generated QR code on a display (e.g., the display 260 of FIG. 2B). For example, the QR code may include a plurality of dots representing the first link address.

According to an embodiment, in operation 307, the electronic device 201 may upload content to be shared to the server 205 based on the link address through the first communication module 250. For example, the electronic device 201 may upload content to be shared to the server 205 based on displaying the QR code on the display 260.

According to an embodiment, in operation 309, the electronic device 201 may identify whether a 1:1 connection (or direct connection) with an external electronic device (e.g., the external electronic device 202 of FIG. 2A) is possible through the second communication module 255. For example, the electronic device 201 may identify whether a 1:1 connection (or direct connection) with the external electronic device 202 is possible based on whether a response signal is received from the external electronic device 202 through the second communication module 255. For example, the response signal may be a signal corresponding to a discovery signal transmitted (or broadcast) by the electronic device 201. For example, if a response signal is not received, the electronic device 201 may determine that a 1:1 connection (or direct connection) with the external electronic device 202 through the second communication module 255 is not possible. Alternatively, if a response signal is received, the electronic device 201 may determine that a 1:1 connection (or direct connection) with the external electronic device 202 is possible. However, even when a response signal is received, the electronic device 201 may determine that a 1:1 connection (or direct connection) with the external electronic device 202 is possible when hash information included in the response signal matches a hash value of the first link address.

According to an embodiment, when it is identified that a 1:1 connection (or direct connection) with the external electronic device 202 is possible through the second communication module 255 (Yes in operation 309), in operation 311, the electronic device 201 may attempt a 1:1 connection (or direct connection) with the external electronic device 202 to transmit content.

According to an embodiment, when it is identified that a 1:1 connection to the external electronic device 202 is not possible through the second communication module 255 (No in operation 309), in operation 313, the electronic device 201 may share content with the external electronic device 202 through the server 205.

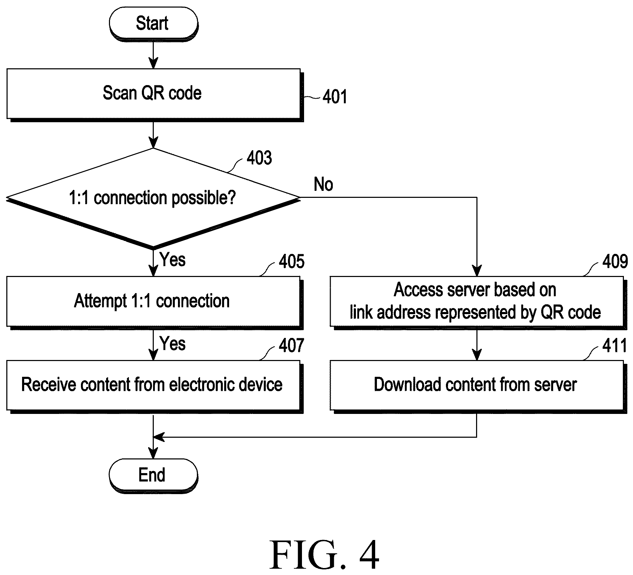

FIG. 4 is a flowchart illustrating a method of operating an external electronic device for downloading content by scanning a QR code, according to an embodiment.

Referring to FIG. 4, according to an embodiment, in operation 401, an external electronic device (e.g., the external electronic device 202 of FIG. 2A) may scan a QR code displayed on an electronic device (e.g., the electronic device 201 of FIG. 2A).

According to an embodiment, in operation 403, the external electronic device 202 may identify whether a 1:1 connection to the electronic device 201 is possible. For example, if a designated application is not stored in the external electronic device 202, the external electronic device 202 may determine that a 1:1 connection is not possible. Alternatively, if a designated application is stored in the external electronic device 202, the external electronic device 202 may determine that a 1:1 connection is possible.

According to an embodiment, if it is determined that a 1:1 connection to the electronic device 201 is possible (Yes in operation 403), in operation 405, the external electronic device 202 may attempt a 1:1 connection to the electronic device 201. In operation 407, the external electronic device 202 may receive content from the electronic device 201 through a 1:1 connection (or D2D method).

According to an embodiment, if it is determined that a 1:1 connection to the electronic device 201 is not possible (No in operation 403), in operation 409, the external electronic device 202 may access the server 205 based on a link address (e.g., the first link address) represented by the QR code. When the electronic device 201 has uploaded content to the server 205, in operation 411, the external electronic device 202 may download content from the server 205.

According to the above-described method, the electronic device 201 may provide content to be shared to the external electronic device 202 according to either the D2D method or the D2S method using a QR code.

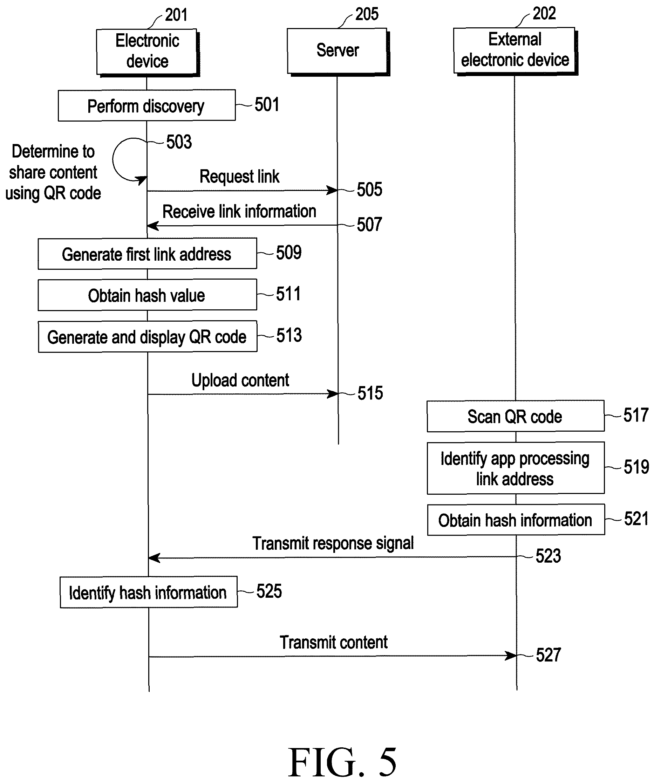

FIG. 5 is a flowchart illustrating a method of operating an electronic device for transmitting content by attempting a 1:1 connection to an external electronic device, according to an embodiment.

Referring to FIG. 5, according to an embodiment, an electronic device (e.g., the electronic device 201 of FIG. 2A) may search for at least one external electronic device around for sharing content stored in the electronic device 201. According to an embodiment, in operation 501, the electronic device 201 may perform a discovery operation for searching for at least one external electronic device around. For example, the electronic device 201 may broadcast a discovery signal (or search signal). For example, the discovery signal (or search signal) may be implemented as a Wi-Fi direct search signal or a BLE search signal.

Meanwhile, the order of operation 501 may not be limited by the above-described content. For example, operation 501 may be performed at any stage before a QR code is displayed by the electronic device 201. According to the implementation, operation 501 may be performed at any stage before content is shared by the electronic device 201.

According to an embodiment, in operation 503, the electronic device 201 may determine to share content using a QR code.

According to an embodiment, in operation 505, the electronic device 201 may request a link for sharing content from a server (e.g., the server 205 of FIG. 2B) based on determining to share content using a QR code.

According to an embodiment, in operation 507, the electronic device 201 may receive link information from the server 205. For example, the link information may include a link identifier for sharing content. Alternatively, the link information may include a link address (e.g., a URL address) for sharing content through the server 205.

According to an embodiment, in operation 509, the electronic device 201 may generate a first link address based on the link information. For example, the electronic device 201 may convert a link address based on link information obtained from the server 205 into a first link address. For example, the first link address may include URL information including an indicator that may be processed by a designated application. Further, the URL information of the first link address may include a link identifier received from the server 205 as a portion of the URL. For example, the link identifier may include a 12-character uppercase and lowercase alphanumeric string.

According to an embodiment, in operation 511, the electronic device 201 may obtain a hash value based on the first link address (or a link identifier included in the first link address). For example, a hash value may be generated using a designated algorithm (e.g., SHA256 algorithm). According to the implementation, the electronic device 201 may use only a value corresponding to 3 bytes among generated hash values as a hash value.

According to an embodiment, in operation 513, the electronic device 201 may generate a QR code based on the first link address and display the generated QR code on a display (e.g., the display 260 of FIG. 2B). For example, the QR code may include information (e.g., a plurality of dots) representing the first link address.

According to an embodiment, in operation 515, the electronic device 201 may upload content to the server 205 using the link address based on generation or display of the QR code. In this case, when upload of the content is completed, the electronic device 201 may map the content to the link address (or the first link address).

According to an embodiment, in operation 517, an external electronic device (e.g., the external electronic device 202 of FIG. 2A) may scan the QR code displayed on the display 260 of the electronic device 201. The external electronic device 202 may scan the QR code using a camera (e.g., the camera 280 of FIG. 2B). The external electronic device 202 may identify information represented by the QR code. The external electronic device 202 may identify a URL address represented by the first link address (or URL information represented by the first link address) according to an identification result.

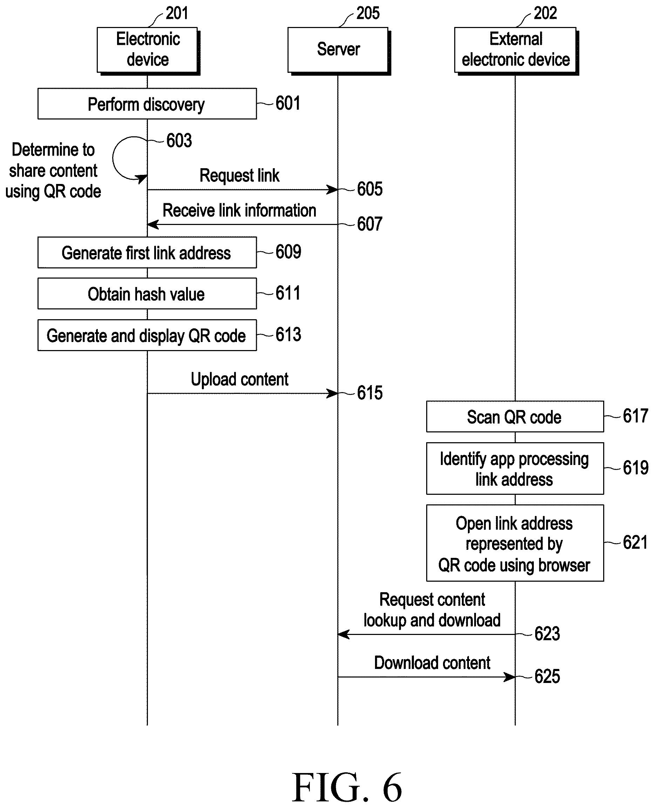

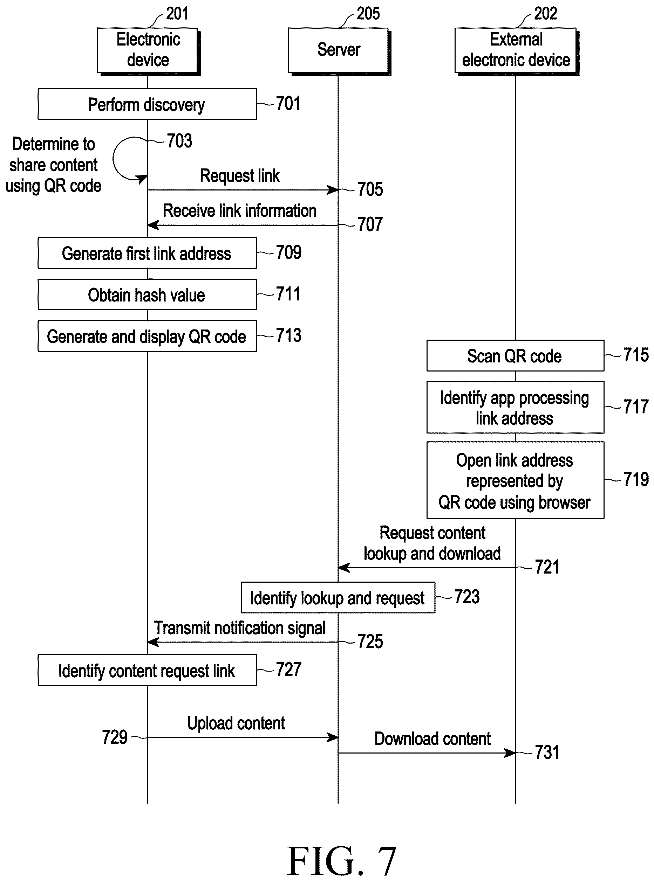

According to an embodiment, in operation 519, the external electronic device 202 may identify whether an application (hereinafter, APP) capable of processing the URL address represented by the first link address is stored. For example, if it is determined that an application (hereinafter, APP) capable of processing the URL address represented by the first link address is stored, the external electronic device 202 may receive shared content in the D2D method. If it is determined that an application (hereinafter, APP) capable of processing the URL address represented by the first link address is not stored, the external electronic device 202 may receive shared content in the D2S method. Meanwhile, a method for the external electronic device 202 to receive shared content in the D2S method is described in connection to FIGS. 6 and 7. Further, since the operation of the external electronic device 202 in FIG. 5 describes a method for sharing content in the D2D method, it is assumed and described that the external electronic device 202 stores an application (hereinafter, APP) capable of processing the URL address (or indicator) represented by the first link address.

According to an embodiment, in operation 521, the external electronic device 202 may obtain hash information based on the first link address (or a link identifier included in the first link address). For example, hash information may be obtained using a designated algorithm (e.g., SHA256 algorithm). According to the implementation, the electronic device 201 may use only a value corresponding to 3 bytes among obtained hash information as hash information.

According to an embodiment, in operation 523, the external electronic device 202 may transmit a response signal to the electronic device 201. The response signal may be a response signal to a discovery signal (or search signal). For example, the response signal may be implemented as a Wi-Fi direct response signal or a BLE response signal. The response signal may include device information (e.g., deviceID, deviceName) of the external electronic device and hash information (e.g., information corresponding to 3 bytes of hash information). Thereafter, the external electronic device 202 may attempt a 1:1 connection (or direct connection) with the electronic device 201 using Wi-Fi direct, Wi-Fi aware, or BLE communication technology through the second communication module (e.g., the second communication module 295 of FIG. 2B).

According to an embodiment, in operation 525, the electronic device 201 may identify hash information. For example, the electronic device 201 may identify whether a hash value of the first link address matches hash information included in the response signal. In other words, the electronic device 201 may identify whether the external electronic device 202 that transmitted the response signal requested content for the first link address based on whether the hash information and hash value match.

According to an embodiment, in operation 527, when the hash value of the first link address matches the hash information included in the response signal, the electronic device 201 may transmit content to the external electronic device 202. In this case, the electronic device 201 may form a 1:1 connection to the external electronic device 202 and transmit content to be shared to the external electronic device 202 through the 1:1 connection.

According to the implementation, the electronic device 201 may not perform operation 515. For example, the electronic device 201 may not upload content to the server 205 after displaying the QR code on the display 260. The electronic device 201 may transmit content to the external electronic device 202 when it is identified that hash information included in the response signal matches the hash value without uploading content to the server 205 in advance.

FIG. 6 is a flowchart illustrating a method of operating an electronic device for sharing content with an external electronic device through a server, according to an embodiment.

Referring to FIG. 6, according to an embodiment, an electronic device (e.g., the electronic device 201 of FIG. 2A) may share content with an external electronic device (e.g., the external electronic device 202 of FIG. 2A) in the D2S method. Operations 601 to 617 of FIG. 6 may be implemented to be identical or similar to operations 501 to 517 of FIG. 5.

According to an embodiment, an electronic device (e.g., the electronic device 201 of FIG. 2A) may search for at least one external electronic device around for sharing content stored in the electronic device 201. According to an embodiment, in operation 601, the electronic device 201 may perform a discovery operation for searching for at least one external electronic device around.

According to an embodiment, in operation 603, the electronic device 201 may determine to share content using a QR code.

According to an embodiment, in operation 605, the electronic device 201 may request a link for sharing content from a server (e.g., the server 205 of FIG. 2B) based on determining to share content using a QR code.

According to an embodiment, in operation 607, the electronic device 201 may receive link information from the server 205. For example, the link information may include a link identifier for sharing content. Alternatively, the link information may include a link address (e.g., a URL address) for sharing content.

According to an embodiment, in operation 609, the electronic device 201 may generate a first link address based on the link information. For example, the electronic device 201 may convert a link address based on link information obtained from the server 205 into a first link address. For example, the first link address may include URL information including an indicator that may be processed by a designated application. Further, the URL information of the first link address may include a link identifier received from the server 205 as a portion of the URL. For example, the link identifier may include a 12-character uppercase and lowercase alphanumeric string.

According to an embodiment, in operation 611, the electronic device 201 may obtain a hash value based on the first link address (or a link identifier included in the first link address). For example, a hash value may be generated using a designated algorithm (e.g., SHA256 algorithm). According to the implementation, the electronic device 201 may use only a value corresponding to designated 3 bytes among generated hash values as a hash value.

According to an embodiment, in operation 613, the electronic device 201 may generate a QR code based on the first link address and display the generated QR code on a display (e.g., the display 260 of FIG. 2B). For example, the QR code may include information representing the first link address.

According to an embodiment, in operation 615, the electronic device 201 may upload content to the server 205 using the link address based on generation or display of the QR code. In this case, when upload of the content is completed, the electronic device 201 may map the content to the link address (or the first link address).

According to an embodiment, in operation 617, the external electronic device 202 may scan the QR code displayed on the display 260 of the electronic device 201. The external electronic device 202 may identify information represented by the QR code. The external electronic device 202 may identify an address represented by the first link address (or URL information represented by the first link address) according to an identification result.

According to an embodiment, in operation 619, the external electronic device 202 may identify whether an application (hereinafter, APP) capable of processing the URL address (or indicator) represented by the first link address is stored. For example, if it is determined that an application (hereinafter, APP) capable of processing the URL address represented by the first link address is not stored, the external electronic device 202 may receive shared content in the D2S method. Meanwhile, since the operation of the external electronic device 202 in FIG. 6 describes a method for sharing content in the D2S method, it is assumed and described that the external electronic device 202 does not store an application (hereinafter, APP) capable of processing the URL address represented by the first link address.

According to an embodiment, if it is determined that an application (hereinafter, APP) capable of processing the URL address represented by the first link address is not stored, in operation 621, the external electronic device 202 may open a link address (e.g., the first link address) represented by the QR code using a browser application. In this case, the server 205 may automatically convert (e.g., re-direct) a link address represented by the QR code to a link address that may be opened by a browser. The external electronic device 202 may access the server 205 by opening the converted link address.

According to an embodiment, in operation 623, the external electronic device 202 may look up content uploaded by the electronic device 201 and request download of the content.

According to an embodiment, in operation 625, the external electronic device 202 may download content from the server 205.

FIG. 7 is a flowchart illustrating a method of operating an electronic device for sharing content with an external electronic device through a server, according to an embodiment.

Referring to FIG. 7, according to an embodiment, in the D2S method described in connection to FIG. 7, compared to the D2S method of FIG. 6, an electronic device (e.g., the electronic device 201 of FIG. 2A) may not upload content to a server (e.g., the server 205 of FIG. 2B) in advance.

According to an embodiment, an electronic device (e.g., the electronic device 201 of FIG. 2A) may search for at least one external electronic device around for sharing content stored in the electronic device 201. According to an embodiment, in operation 701, the electronic device 201 may perform a discovery operation for searching for at least one external electronic device around.

According to an embodiment, in operation 703, the electronic device 201 may determine to share content using a QR code.

According to an embodiment, in operation 705, the electronic device 201 may request a link for sharing content from a server (e.g., the server 205 of FIG. 2B) based on determining to share content using a QR code.

According to an embodiment, in operation 707, the electronic device 201 may receive link information from the server 205. For example, the link information may include a link identifier for sharing content. Alternatively, the link information may include a link address (e.g., a URL address) for sharing content through the server 205.

According to an embodiment, in operation 709, the electronic device 201 may generate a first link address based on the link information. For example, the electronic device 201 may convert a link address based on link information obtained from the server 205 into a first link address. For example, the first link address may include URL information including an indicator that may be processed by a designated application. Further, the URL information of the first link address may include a link identifier received from the server 205 as a portion of the URL. For example, the link identifier may include a 12-character uppercase and lowercase alphanumeric string.

According to an embodiment, in operation 711, the electronic device 201 may obtain a hash value based on the first link address (or a link identifier included in the first link address). For example, a hash value may be generated using a designated algorithm (e.g., SHA256 algorithm). According to the implementation, the electronic device 201 may use only a value corresponding to designated 3 bytes among generated hash values as a hash value.

According to an embodiment, in operation 713, the electronic device 201 may generate a QR code based on the first link address and display the generated QR code on a display (e.g., the display 260 of FIG. 2B). For example, the QR code may include information (e.g., a plurality of dots) representing the first link address.

According to an embodiment, in operation 715, the external electronic device 202 may scan the QR code displayed on the display 260 of the electronic device 201. The external electronic device 202 may identify information represented by the QR code. The external electronic device 202 may identify an address represented by the first link address (or URL information represented by the first link address) according to an identification result.

According to an embodiment, in operation 717, the external electronic device 202 may identify whether an application (hereinafter, APP) capable of processing the URL address (or an indicator included in the URL address) represented by the first link address is stored. For example, if it is determined that an application (hereinafter, APP) capable of processing the URL address represented by the first link address is not stored, the external electronic device 202 may receive shared content in the D2S method. Meanwhile, since the operation of the external electronic device 202 in FIG. 7 describes a method for sharing content in the D2S method, it is assumed and described that the external electronic device 202 does not store an application (hereinafter, APP) capable of processing the URL address represented by the first link address.

According to an embodiment, if it is determined that an application (hereinafter, APP) capable of processing the URL address represented by the first link address is not stored, in operation 719, the external electronic device 202 may open a link address (e.g., the first link address) represented by the QR code using a browser application. In this case, the server 205 may automatically convert (e.g., re-direct) a link address (e.g., the first link address) represented by the QR code to a link address that may be opened by a browser. The external electronic device 202 may access the server 205 by opening the converted link address.

According to an embodiment, in operation 721, the external electronic device 202 may look up content uploaded by the electronic device 201 and request download of the content.

According to an embodiment, in operation 723, the server 205 may identify a request from the external electronic device 202. In operation 725, when the request from the external electronic device 202 is identified, the server 205 may transmit a notification signal to the electronic device 201. For example, the notification signal may include information informing that the external electronic device 202 accesses the server 205 to look up content or request download and a link identifier of the first link address.

According to an embodiment, in operation 725, the electronic device 201 may identify a link address that requested content based on the notification signal (or a link identifier included in the notification signal). For example, the electronic device 201 may identify whether a link identifier included in the notification signal matches a link identifier of the first link address.

According to an embodiment, when it is identified that the link identifier included in the notification signal matches the link identifier of the first link address, in operation 727, the electronic device 201 may upload content to be shared to the server 205 using the link address through the first communication module 250. In this case, when upload of the content is completed, the electronic device 201 may map the content to the link address (or the first link address).

According to an embodiment, in operation 731, the external electronic device 202 may download content uploaded by the electronic device 202 from the server 205 through the first communication module 290.

As described above, the electronic device 201 may provide content to the external electronic device 202 according to any one of the D2S methods of FIGS. 6 and 7.

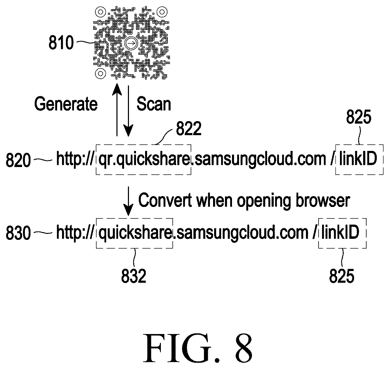

FIG. 8 is a view illustrating a QR code, a first link, and a second link, according to an embodiment.

Referring to FIG. 8, according to an embodiment, an electronic device (e.g., the electronic device 201 of FIG. 2A) may generate a first link address 820 based on link information (e.g., a link identifier 825) received from a server (e.g., the server 205 of FIG. 2B). For example, the electronic device 201 may convert a second link address 830 based on a link identifier 825 obtained from the server 205 into a first link address 820. For example, the first link address 820 may include URL information. The URL information may include an indicator 822 that may be processed by a designated application and a link identifier 825.

According to an embodiment, the electronic device 201 may generate a QR code 810 based on the first link address 820. The QR code 810 may include a plurality of dots. The plurality of dots may include information representing the first link address 820.

According to an embodiment, the external electronic device 202 may scan the QR code 810 to identify information about the first link address 820 represented by the QR code 810. When a designated application capable of processing the first link address 820 (or the indicator 822) is installed in the external electronic device 202, the external electronic device 202 may process the first link address 820 using the designated application. In this case, the external electronic device 202 may obtain hash information based on the first link address 820 (or the link identifier 825). The external electronic device 202 may transmit a response signal including hash information to the electronic device 201 through a short-range communication module (e.g., the second communication module 295 of FIG. 2B) and attempt a 1:1 connection to the electronic device 201.

According to an embodiment, when a designated application capable of processing the first link address 820 (or the indicator 822) is not installed in the external electronic device 202, the first link address 820 may be opened using a browser application. In this case, the server 205 may automatically convert (or re-direct) the first link address 820 to a second link address 830. For example, the second link address 830 may include URL information in which the indicator 822 is changed to a string 832 for sharing content through the server 205. Further, except for the string 832, the second link address 830 may be the same as the first link address 820. The external electronic device 202 may access the server 205 through the second link address 830. Thereafter, the external electronic device 202 may download content uploaded to the second link address 830 corresponding to the first link address 820.

Meanwhile, the URL address or strings included in the link address described in connection to FIG. 8 are exemplary only, and the technical features of the disclosure may not be limited thereto.

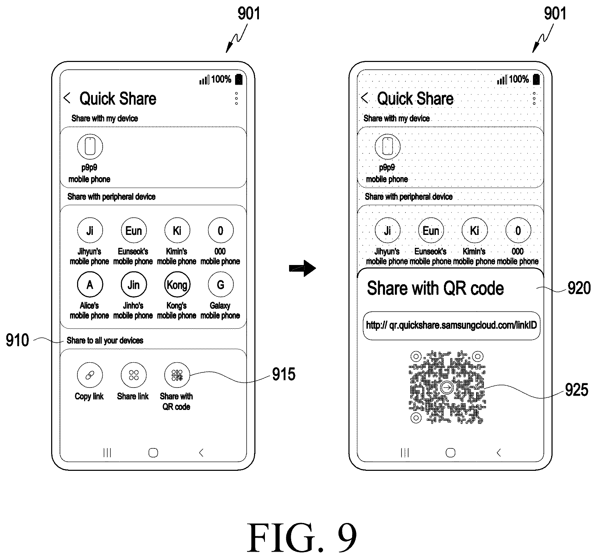

FIG. 9 is a view illustrating screens for an electronic device to share content using a QR code, according to an embodiment.

Referring to FIG. 9, according to an embodiment, an electronic device 901 (e.g., the electronic device 201 of FIG. 2A) may display a first screen 910 for sharing content with at least one external electronic device. For example, the first screen 910 may include a first object 915 for sharing content using a QR code. The electronic device 201 may display a second screen 920 based on a user input to the first object 915.

According to an embodiment, the electronic device 901 may display a second screen 920 for sharing content using a QR code. The second screen 920 may include a QR code 925. For example, the QR code 925 may include a plurality of dots. The plurality of dots may include information representing a link address (e.g., "http://qr.quickshare.samsungcloud.com/linkID") generated based on link information (e.g., a link identifier (linkID)) received by the electronic device 901 from a server (e.g., the server 205 of FIG. 2B).

According to an embodiment, the electronic device 901 may provide content to an external electronic device (e.g., the external electronic device 202 of FIG. 2A) that scanned the QR code 925 according to either the D2D method or the D2S method.

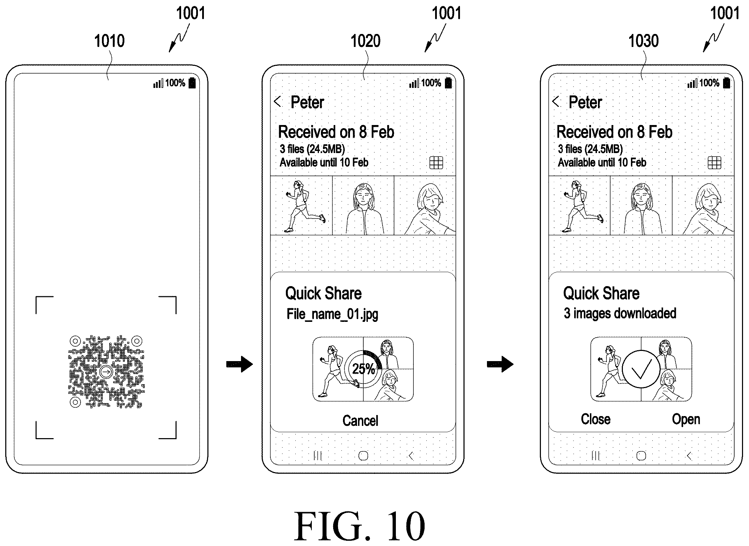

FIG. 10 is a view illustrating screens for an external electronic device to receive content from an electronic device by scanning a QR code, according to an embodiment.

Referring to FIG. 10, according to an embodiment, an external electronic device 1001 (e.g., the external electronic device 202 of FIG. 2A) may scan a QR code displayed on an electronic device (e.g., the electronic device 201 of FIG. 2A or the electronic device 901 of FIG. 9). For example, the external electronic device 1001 may display a first screen 1010 for scanning a QR code to scan a QR code displayed on the electronic device 201 or 901.

According to an embodiment, the external electronic device 1001 may receive content from the electronic device 201 or 901 according to the D2D method or the D2S method. The external electronic device 1001 may display a second screen 1020 indicating a download status of content. For example, the second screen 1020 may include information indicating a name of content, a type of content, and a download progress status of content. Further, the second screen 1020 may also include information about a download deadline and download time. The second screen 1020 may further include an object for stopping download.

According to an embodiment, when download of content is completed, the external electronic device 1001 may display a third screen 1030. For example, the third screen 1030 may include information about downloaded content (e.g., a type of content, a number of content).

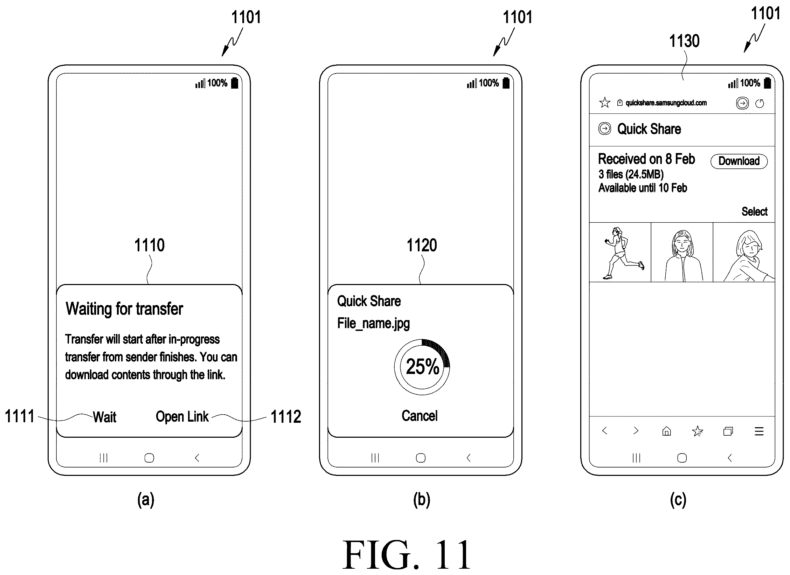

FIG. 11 is a view illustrating screens for an external electronic device to download content, according to an embodiment.

Referring to FIG. 11(a), an external electronic device 1101 (e.g., the external electronic device 202 of FIG. 2A) may display a first screen 1110 requesting and waiting for sharing of content from an electronic device (e.g., the electronic device 201 of FIG. 2A). For example, the external electronic device 1101 may display the first screen 1110 while requesting and waiting for a 1:1 connection to the electronic device 201 according to the D2D method. The first screen 1110 may include a first object 1111 and a second object 1112.

According to an embodiment, the first object 1111 may be an object for continuing to wait for a 1:1 connection. The external electronic device 1101 may operate in a mode for downloading content according to the D2D method based on a user input to the first object 1111. Thereafter, when a 1:1 connection is formed with the electronic device 201, the external electronic device 1101 may receive content from the electronic device 201. In this case, the external electronic device 1101 may display a second screen 1120 indicating a download status of content, as illustrated in FIG. 11(b).

According to an embodiment, the second object 1112 may be an object for opening the first link address to download content through a server. The external electronic device 1101 may operate in a mode for downloading content according to the D2S method based on a user input to the second object 1112. Thereafter, the external electronic device 1101 may access a server (e.g., the server 205 of FIG. 2B) through the first link address to identify content uploaded by the electronic device 201. In this case, the external electronic device 1101 may display a third screen 1130 indicating information about uploaded content, as illustrated in FIG. 11 (c).

According to the above-described method, the external electronic device 1101 may select or determine a method for downloading content from the D2D method or the D2S method before a 1:1 connection is formed with the electronic device 201.

According to the implementation, when the external electronic device 1101 is moved to a location where the D2D method is not supported while receiving content in the D2D method (e.g., when the other party needs to move urgently and moves away to a distance where the D2D method is not supported), the content may be received in the D2S method. For example, when the external electronic device 1101 fails to complete download of content in the D2D method, it may newly download the content through a server. Alternatively, when the external electronic device 1101 fails to complete download of content in the D2D method, it may continuously download the remaining portion of the content through a server.

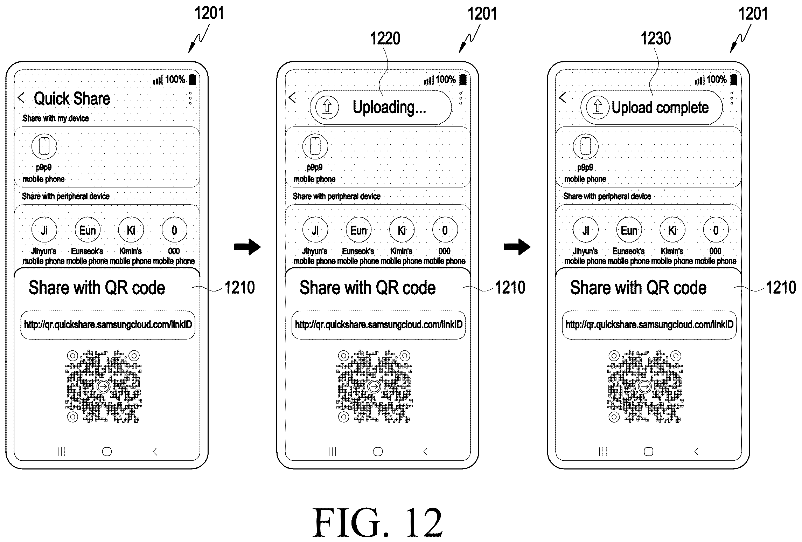

FIG. 12 is a view illustrating screens for an electronic device to upload content to a server to share content using a QR code, according to an embodiment.

Referring to FIG. 12, according to an embodiment, an electronic device 1201 (e.g., the electronic device 201 of FIG. 2A) may display a first screen 1210 for sharing content using a QR code.

According to an embodiment, the electronic device 1201 may upload content to be shared to a server (e.g., the server 205 of FIG. 2B) based on generation or display of a QR code. When uploading content to the server 205, the electronic device 1201 may display first status information 1220 indicating an upload status. Thereafter, when upload of content is completed, the electronic device 1201 may display second status information 1230 indicating upload completion.

According to the implementation, the electronic device 1201 may transmit content to be shared to an external electronic device (e.g., the external electronic device 202 of FIG. 2A) when hash information included in a response signal received from the external electronic device 202 matches a hash value of the first link address. In this case as well, the electronic device 1201 may display information indicating a transmission status, such as the second screen 1220 and the third screen 1230.

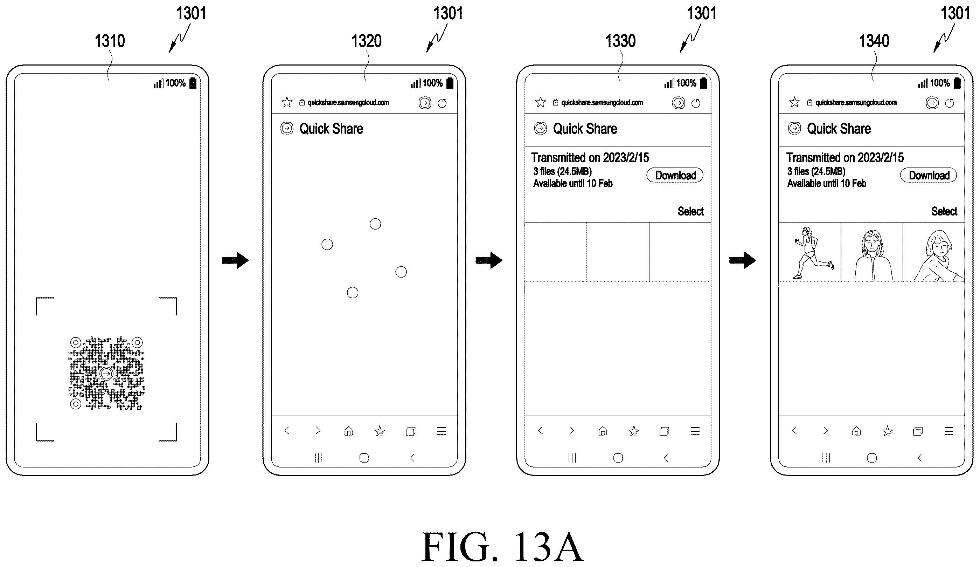

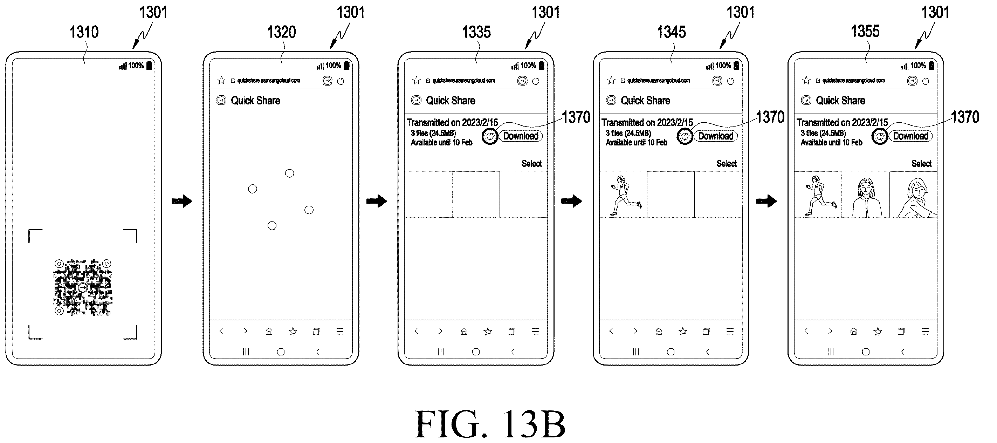

FIGS. 13A and 13B are views illustrating screens for an external electronic device to download content from a server by scanning a QR code, according to an embodiment.

Referring to FIGS. 13A and 13B, according to an embodiment, an external electronic device 1301 (e.g., the external electronic device 202 of FIG. 2A) may scan a QR code displayed on an electronic device (e.g., the electronic device 201 of FIG. 2A). For example, the external electronic device 1001 may display a first screen 1310 for scanning a QR code to scan a QR code displayed on the electronic device 201.

According to an embodiment, the external electronic device 1301 may open a first link address represented by a QR code using a browser application according to the D2S method. In this case, the first link address ("http://qr.quickshare.samsungcloud.com/linkID") may be converted to a second link address (e.g., "http://quickshare.samsungcloud.com/linkID") by a server (e.g., the server 205 of FIG. 2B). The external electronic device 1301 may display a second screen 1320 while opening the link.

Referring to FIG. 13A, according to an embodiment, the external electronic device 1301 may display a third screen 1330 and a fourth screen 1340 including information about uploaded content. For example, when upload of content by the electronic device 201 has not yet been completed, the third screen 1330 without a preview of the content may be displayed. In this case, the external electronic device 1301 may automatically update an upload status of content at designated time intervals. When upload of content by the electronic device 201 is completed, the external electronic device 1301 may display the fourth screen 1340 with a preview of the content displayed. The external electronic device 1301 may select at least one of uploaded content and download the selected content. For example, the external electronic device 1301 may select at least one content among uploaded content based on a user input. When a command to download the selected at least one content (e.g., identifying a user input to a download button) is identified, the external electronic device 1301 may start or perform an operation of downloading the selected at least one content.

Referring to FIG. 13B, according to an embodiment, the external electronic device 1301 may display a third screen 1335, a fourth screen 1345, and a fifth screen 1355 including information about uploaded content. For example, when upload of content by the electronic device 201 has not yet been completed, the third screen 1335 without a preview of the content may be displayed. Each of the third screen 1335, the fourth screen 1345, and the fifth screen 1355 may include a refresh object 1370. In this case, the external electronic device 1301 may update an upload status of content based on a user input to the refresh object 1370. When only some content has been uploaded by the electronic device 201, the external electronic device 1301 may display the fourth screen 1345 with a preview of uploaded content displayed. When upload of all content by the electronic device 201 is completed, the external electronic device 1301 may display the fifth screen 1355 with previews of all content displayed. For example, the external electronic device 1301 may update the third screen 1335 to the fourth screen 1345 in response to a user input to the refresh object 1370. Further, the external electronic device 1301 may update the fourth screen 1355 to the fifth screen 1355 in response to a user input to the refresh object 1370. The external electronic device 1301 may select at least one of uploaded content and download the selected content.

According to an embodiment, the electronic device 201 may include a first communication module 250, a second communication module 255, a display 260, at least one processor 220, and a memory 130 storing instructions. According to an embodiment, the instructions may, when executed by the at least one processor, cause the electronic device to identify a command to share content to at least one external electronic device using a QR code 210. According to an embodiment, the instructions may, when executed by the at least one processor, cause the electronic device to obtain a first link address for sharing the content through the server based on the command, the first link address including a link identifier received from a server 205 through the first communication module. According to an embodiment, the instructions may, when executed by the at least one processor, cause the electronic device to convert the link address into a first link address including an indicator for connecting with a first external electronic device 202 among the at least one external electronic device through the second communication module. According to an embodiment, the instructions may, when executed by the at least one processor, cause the electronic device to display a first QR code generated based on the first link address on the display. According to an embodiment, the instructions may, when executed by the at least one processor, cause the electronic device to upload the content to the server through the first communication module based on the link address. According to an embodiment, the instructions may, when executed by the at least one processor, cause the electronic device to transmit the content to the first external electronic device through the second communication module when the first external electronic device and the electronic device are connected through the second communication module based on display of the first QR code.

According to an embodiment, the instructions may, when executed by the at least one processor, cause the electronic device to obtain a hash value based on the link identifier.

According to an embodiment, the instructions may, when executed by the at least one processor, cause the electronic device to broadcast a search signal for searching for the at least one external electronic device through the second communication module. According to an embodiment, the instructions may, when executed by the at least one processor, cause the electronic device to attempt a 1:1 connection to the first external electronic device upon receiving a response signal to the search signal from the first external electronic device through the second communication module.

According to an embodiment, the instructions may, when executed by the at least one processor, cause the electronic device to compare hash information included in the response signal with the hash value. According to an embodiment, the instructions may, when executed by the at least one processor, cause the electronic device to transmit the content to the first external electronic device based on a comparison result.

According to an embodiment, the instructions may, when executed by the at least one processor, cause the electronic device to share the content with the first external electronic device using the content uploaded to the server when it is identified that the first external electronic device may not connect with the electronic device through the second communication module based on display of the first QR code.

According to an embodiment, the first link address may include URL information enabling attempting a 1:1 connection to the first external electronic device through a designated application. According to an embodiment, the link address may include URL information enabling access to the server using a browser application.

According to an embodiment, the instructions may, when executed by the at least one processor, cause the electronic device to upload the content to the server using the link address based on generation of the first QR code.

According to an embodiment, the instructions may, when executed by the at least one processor, cause the electronic device to receive a notification signal requesting sharing of the content from the server through the first communication module. According to an embodiment, the instructions may, when executed by the at least one processor, cause the electronic device to upload the content to the server using the link based on the notification signal.

According to an embodiment, the instructions may, when executed by the at least one processor, cause the electronic device to compare hash information included in the notification signal with a hash value obtained based on the link identifier. According to an embodiment, the instructions may, when executed by the at least one processor, cause the electronic device to upload the content to the server based on a comparison result.

According to an embodiment, the instructions may, when executed by the at least one processor, cause the electronic device to map the content to the link address when upload of the content is completed.

According to an embodiment, a method of operating the electronic device 201 may include identifying a command to share content to at least one external electronic device using a QR code 210. According to an embodiment, the method may include obtaining a link address for sharing the content through the server based on the command, the link address including a link identifier received from a server 205 through a first communication module 250 included in the electronic device. According to an embodiment, the method of operating the electronic device may include converting the link address into a first link address including an indicator for connecting with a first external electronic device among the at least one external electronic device through a second communication module 255 included in the electronic device. According to an embodiment, the method of operating the electronic device may include displaying a first QR code generated based on the first link address on a display 260 included in the electronic device. According to an embodiment, the method of operating the electronic device may include uploading the content to the server through the first communication module using the link address. According to an embodiment, the method of operating the electronic device may include transmitting the content to the first external electronic device through the second communication module when the first external electronic device and the electronic device are connected through the second communication module based on display of the first QR code.

According to an embodiment, the method of operating the electronic device may further include obtaining a hash value based on the link identifier.

According to an embodiment, the method of operating the electronic device may further include broadcasting a search signal for searching for the at least one external electronic device through the second communication module. According to an embodiment, the method of operating the electronic device may further include attempting the 1: 1 connection to the first external electronic device upon receiving a response signal to the search signal from the first external electronic device through the second communication module.

According to an embodiment, transmitting the content to the first external electronic device may include comparing hash information included in the response signal with the hash value. According to an embodiment, transmitting the content to the first external electronic device may include transmitting the content to the first external electronic device based on a comparison result.

According to an embodiment, the method of operating the electronic device may further include sharing the content with the first external electronic device using the content uploaded to the server when it is identified that the first external electronic device may not connect with the electronic device through the second communication module based on display of the first QR code.

According to an embodiment, uploading the content may include uploading the content to the server using the link address based on generation of the first QR code.

According to an embodiment, uploading the content may include receiving a notification signal requesting sharing of the content from the server through the first communication module. According to an embodiment, uploading the content may include uploading the content to the server using the link address based on the notification signal.

According to an embodiment, uploading the content may include comparing hash information included in the notification signal with a hash value obtained based on the link identifier. According to an embodiment, obtaining the first link may include uploading the content to the server based on a comparison result.

According to an embodiment, the method of operating the electronic device may further include mapping the content to the link address when upload of the content is completed.

According to an embodiment, a non-transitory recording medium 130 may store instructions for performing operations including identifying a command for an electronic device 201 to share content to at least one external electronic device using a QR code 210, obtaining a first link address for sharing the content through the server based on the command, the first link address including a link identifier received from a server 205 through a first communication module 250 included in the electronic device, converting the link address into a first link address including an indicator for connecting with a first external electronic device 202 among the at least one external electronic device through a second communication module 255 included in the electronic device, displaying a first QR code generated based on the first link address on a display 260 included in the electronic device, uploading the content to the server through the first communication module based on the link address, and transmitting the content to the first external electronic device through the second communication module when the first external electronic device and the electronic device are connected through the second communication module based on display of the first QR code.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201), comprising:
a first communication module (250);
a second communication module (255);
a display (260);
at least one processor (220); and
memory (130) storing instructions, wherein the instructions, when executed by the at least one processor, cause the electronic device to:
identify a command to share content to at least one external electronic device using a QR code (210);
obtain, based on the command, a link address for sharing the content through a server (205), the link address including a link identifier received from the server (205) through the first communication module;
convert the link address into a first link address including an indicator for connecting with a first external electronic device among the at least one external electronic device through the second communication module;
display a first QR code generated based on the first link address on the display;
upload the content to the server through the first communication module based on the link address; and
transmit the content to the first external electronic device through the second communication module when the first external electronic device and the electronic device are connected through the second communication module based on display of the first QR code.

2. The electronic device of claim 1, wherein the instructions, when executed by the at least one processor, cause the electronic device to obtain a hash value based on the link identifier.

3. The electronic device of claim 2, wherein the instructions, when executed by the at least one processor, cause the electronic device to:
broadcast a search signal for searching for the at least one external electronic device through the second communication module; and
attempt a 1:1 connection to the first external electronic device upon receiving a response signal to the search signal from the first external electronic device through the second communication module.

4. The electronic device of claim 3, wherein the instructions, when executed by the at least one processor, cause the electronic device to:
compare hash information included in the response signal with the hash value; and
transmit the content to the first external electronic device based on a comparison result.

5. The electronic device of claim 1, wherein the instructions, when executed by the at least one processor, cause the electronic device to share the content with the first external electronic device using the content uploaded to the server when it is identified that the first external electronic device may not connect with the electronic device through the second communication module based on display of the first QR code.

6. The electronic device of claim 1, wherein the first link address includes URL information enabling attempting a 1:1 connection to the first external electronic device through a designated application, and wherein the link address includes URL information enabling access to the server using a browser application.

7. The electronic device of claim 1, wherein the instructions, when executed by the at least one processor, cause the electronic device to upload the content to the server using the link address based on generation of the first QR code.

8. The electronic device of claim 1, wherein the instructions, when executed by the at least one processor, cause the electronic device to:
receive a notification signal requesting sharing of the content from the server through the first communication module; and
upload the content to the server using the link address based on the notification signal.

9. The electronic device of claim 8, wherein the instructions, when executed by the at least one processor, cause the electronic device to:
compare hash information included in the notification signal with a hash value obtained based on the link identifier; and
upload the content to the server based on a comparison result.

10. The electronic device of claim 9, wherein the instructions, when executed by the at least one processor, cause the electronic device to map the content to the link address when upload of the content is completed.

11. A method of operating an electronic device (201), the method comprising:
identifying a command to share content to at least one external electronic device using a QR code (210);
obtaining, based on the command, a link address for sharing the content through a server (205), the link address including a link identifier received from the server (205) through a first communication module (250) included in the electronic device;
converting the link address into a first link address including an indicator for connecting with a first external electronic device among the at least one external electronic device through a second communication module (255) included in the electronic device;
displaying a first QR code generated based on the first link address on a display (260) included in the electronic device;
uploading the content to the server through the first communication module based on the link address; and
transmitting the content to the first external electronic device through the second communication module when the first external electronic device and the electronic device are connected through the second communication module based on display of the first QR code.

12. The method of claim 11, further comprising obtaining a hash value based on the link identifier.

13. The method of claim 12, further comprising:
broadcasting a search signal for searching for the at least one external electronic device through the second communication module; and
attempting the 1:1 connection to the first external electronic device upon receiving a response signal to the search signal from the first external electronic device through the second communication module.

14. The method of claim 13, wherein transmitting the content to the first external electronic device includes:
comparing hash information included in the response signal with the hash value; and
transmitting the content to the first external electronic device based on a comparison result.

15. **16.** The method of claim 11, further comprising sharing the content with the first external electronic device using the content uploaded to the server when it is identified that the first external electronic device may not connect with the electronic device through the second communication module based on display of the first QR code.
